# EUROPÄISCHE PATENTSCHRIFT

(11) **EP 2 986 370 B1**
(45) Veröffentlichungstag und Bekanntmachung des Hinweises auf die Patenterteilung: **20.01.2021**
(21) Anmeldenummer: 14724633.4
(22) Anmeldetag: 17.04.2014
(51) Int. Cl.: B01J 19/00, C40B 50/18

(54) **VERFAHREN ZUR KOMBINATORISCHEN PARTIKELMANIPULATION ZUR HERSTELLUNG VON HOCHDICHTEN MOLEKÜLARRAYS, INSBESONDERE VON PEPTIDARRAYS, UND DAMIT ERHÄLTLICHE MOLEKÜLARRAYS**
METHOD FOR COMBINATORIAL PARTICLE MANIPULATION FOR PRODUCING HIGH-DENSITY MOLECULE ARRAYS, IN PARTICULAR PEPTIDE ARRAYS, AND MOLECULE ARRAYS THAT CAN BE OBTAINED BY MEANS THEREOF
PROCÉDÉ DE MANIPULATION DE PARTICULES COMBINATOIRE POUR PRODUIRE DES RÉSEAUX DE MOLÉCULES À HAUTE DENSITÉ, EN PARTICULIER DES RÉSEAUX DE PEPTIDES, ET RÉSEAUX DE MOLÉCULES POUVANT ÊTRE OBTENUS PAR CE PROCÉDÉ

(30) Priorität: 17.04.2013 WO PCT/EP2013/001141
(43) Veröffentlichungstag der Anmeldung: 24.02.2016
(73) Patentinhaber: Karlsruher Institut für Technologie, 76131 Karlsruhe (DE); Pepperprint GmbH, 69123 Heidelberg (DE)
(72) Erfinder: MÄRKLE, Frieder, 76337 Waldbronn (DE); NESTEROV-MÜLLER, Alexander, 76661 Philippsburg (DE); BREITLING, Frank, 69115 Heidelberg (DE); LÖFFLER, Felix, 69115 Heidelberg (DE); SCHILLO, Sebastian, 67061 Ludwigshafen (DE); BYKOVSKAYA, Valentina, 76137 Karlsruhe (DE); VON BOJNICIC-KNINSKI, Clemens, 76228 Karlsruhe (DE); LEIBE, Klaus, 69181 Leimen (DE)
(74) Vertreter: Müller-Boré & Partner Patentanwälte PartG mbB
(86) Internationale Anmeldenummer: PCT/EP2014/001046
(87) Internationale Veröffentlichungsnummer: WO 2014/170031

(56) Entgegenhaltungen:
- WO-A1-02/066550
- DE-A1- 10 156 329
- THERESA B PHAMDUY ET AL: "Laser direct-write of single microbeads into spatially-ordered patterns", BIOFABRICATION, Bd. 4, Nr. 2, 4. Mai 2012 (2012-05-04), Seite 025006, XP055126061, ISSN: 1758-5082, DOI: 10.1088/1758-5082/4/2/025006
- P. SERRA ET AL: "Laser direct writing of biomolecule microarrays", APPLIED PHYSICS A, Bd. 79, Nr. 4-6, 26. Juli 2004 (2004-07-26), XP055126147, ISSN: 0947-8396, DOI: 10.1007/s00339-004-2577-2
- A. KARAISKOU ET AL: "Microfabrication of biomaterials by the sub-ps laser-induced forward transfer process", APPLIED SURFACE SCIENCE, Bd. 208-209, 1. März 2003 (2003-03-01), Seiten 245-249, XP055126157, ISSN: 0169-4332, DOI: 10.1016/S0169-4332(02)01396-X
- B.R. RINGEISEN ET AL: "Picoliter-Scale Protein Microarrays by Laser Direct Write", BIOTECHNOLOGY PROGRESS, Bd. 18, Nr. 5, 4. Oktober 2002 (2002-10-04), Seiten 1126-1129, XP055126158, ISSN: 8756-7938, DOI: 10.1021/bp015516g

## Beschreibung

Die vorliegende Erfindung betrifft ein Verfahren zur kombinatorischen Partikelmanipulation zur Herstellung von hochdichten Molekülarrays sowie die daraus erhaltenen hochdichten Molekülarrays. Insbesondere betrifft die vorliegende Erfindung ein Verfahren zur Herstellung von hochdichten Molekülarrays, insbesondere von Peptid- oder Oligonukleotidarrays, durch kombinatorische Strukturierung von Partikeln, wobei die Strukturierung durch selektive und direkte Einwirkung elektromagnetischer Strahlung erreicht wird.

In der Mikroarray-Technologie wird eine Vielzahl an verschiedenen Molekülen in einem vordefinierten Muster auf einer Substratoberfläche in immobilisierter Form angeordnet.

Diese Technologie erlaubt es, Analysen und/oder chemische Reaktionen an einer sehr hohen Anzahl verschiedener Substanzen durchzuführen und wird bevorzugt in der biotechnologischen Forschung und der pharmazeutischen Industrie für Hochdurchsatzscreenings eingesetzt.

Dies ist insbesondere bei der Synthese größerer Moleküle von Vorteil, deren Eigenschaften und insbesondere deren Wechselwirkungen miteinander oftmals so komplex sind, dass diese nur experimentell erforscht werden können. In der kombinatorischen Chemie ermöglichen es solche Molekülarrays, alle darauf synthetisierten Produkte parallel auf gewisse Eigenschaften zu untersuchen. Im Fall von Peptidarrays können dies zum Beispiel Antikörperwechselwirkungen sein. Allerdings mangelt es an Verfahren, um solche Molekülarrays in hoher Qualität und in der nötigen Auflösung herzustellen.

Die Herstellung von *in-situ* Peptidarrays wurde erstmals in Frank R., Tetrahedron, 48 (1992), 9217-9232, beschrieben, wobei eine Festphasen-gekoppelte Peptidsynthese (Merrifield-Synthese) angewendet wurde. Dazu werden die 20 verschiedenen Aminosäurederivate in einem Lösungsmittel auf definierte Spots eines aminoterminierten Trägers aufgebracht und somit Schicht für Schicht viele Peptide in einer kombinatorischen Synthese nebeneinander aufgebaut. Ein Nachteil dieser "Spot-Synthese" ist jedoch, dass damit bisher nur etwa 25 Peptide pro cm² synthetisiert werden können. Dies liegt darin begründet, dass kleine Flüssigkeitströpfchen sehr schwer zu dosieren sind, so dass die benötigten viskosen Lösungsmittel an der Oberfläche entlang "kriechen", und dass diese Tröpfchen während der Kupplungsreaktion längere Zeit nicht verdunsten dürfen.

Im Stand der Technik wurden zuletzt verschieden Methoden zur Herstellung von Peptidarrays vorgeschlagen. Bestehende Systeme basieren auf der Xerographie zur kombinatorischen Ablagerung von Partikeln. Die verwendeten Partikel enthalten Aminosäurederivate. Dabei ist es möglich, unter Verwendung eines speziellen Laserdruckers für die partikelbasierte Synthese Peptidarrays zu produzieren, wie in Stadler, V., et al., "Kombinatorische Synthese von Peptidarrays mit einem Laserdrucker", Angewandte Chemie, 2008, 120 (37), 7241-7244 beschrieben und wie auch in EP 1 140 977 B1 oder DE 101 56 329 A1 beschrieben, erzeugt dabei das Lichtmuster einer LED-Zeile zunächst ein Ladungsmuster auf einer Fotowalze. Triboelektrisch aufgeladene Partikel setzen sich auf die gegensätzlich geladenen Bereiche der Fotowalze und es entsteht ein Partikelmuster. Dieses Partikelmuster wird von der Fotowalze auf einen Träger übertragen. Anschließend werden die Partikel durch Erhitzen auf dem Träger fixiert. Ein solches Verfahren erlaubt es jedoch nicht, die Partikel direkt zu strukturieren.

Obwohl sich die vorstehend beschriebenen Laserdrucker für die partikelbasierte Synthese und Produktion von Peptidarrays bereits kommerziell bewährt haben, können mit diesen Druckern zudem nur Partikelmuster mit einem Rastermaß, d.h. einen Mittelpunkt-zu-Mittelpunkt-Abstand der Spots, von 350 µm erzielt werden. Des Weiteren ist die Anzahl der für eine Synthese einsetzbaren Monomere durch die Anzahl der Druckwerke im Laserdrucker begrenzt. Da die Druckwerke exakt zueinander justiert sein müssen, nimmt mit jedem Druckwerk die Störanfälligkeit zu. Da mit jedem weiteren Druckwerk auch die Komplexität des Druckers zunimmt, ist der Bau eines Druckers mit 20 Druckwerken oder mehr bei gleich bleibender Druckgenauigkeit sehr teuer.

Ein anderes Verfahren basiert auf der Verwendung eines Halbleiterchips, wie beispielsweise in Beyer, M., et al., "Combinatorial synthesis of peptide arrays onto a microchip", Science, 2007, 318 (5858), 1888, beschrieben. Dabei handelt es sich um einen speziellen Hochspannungs-CMOS-Chip, dessen Oberfläche in verschiedene Elektroden unterteilt ist. Durch Programmierung des Chips können bestimmte Elektroden eingeschaltet werden. Durch die entstehenden elektrischen Felder werden geladene Partikel selektiv auf den eingeschalteten Elektroden abgelagert. Die Synthese des Molekülarrays kann entweder direkt auf der Chipoberfläche durchgeführt werden, oder das gesamte Partikelmuster auf dem Chip wird mittels eines elektrischen Feldes auf einen Zielträger, wie beispielsweise einen Glasobjektträger, übertragen, wo auch die Synthese stattfindet.

Beim Hochspannungs-CMOS-Chips ist die nutzbare Fläche des Chips bedingt durch den Herstellungsprozess sehr klein, bei aktuellen Modellen 12 mm x 12 mm. Dies bedeutet, dass die Anzahl an unterschiedlichen Molekülen durch die zur Verfügung stehende Fläche sehr begrenzt ist.

Beim chipbasierten Verfahren findet die selektive Ablagerung von Partikeln aus einem Aerosol statt. Um reproduzierbare Ergebnisse zu erzielen, müssen sehr hohe Anforderungen an die Aerosolparameter gestellt werden, wie beispielsweise Aerosoldichte, Partikelgeschwindigkeit und Partikelladung. Dies ist in der Praxis jedoch nur schwer durchführbar und führt zu Problemen und Verzögerungen, da sehr viele Einflussgrößen beachtet werden müssen, wie beispielsweise Aerosolführung, Strömungsdynamik, Partikelgrößenverteilung, Luftfeuchtigkeit, etc.

Daneben sind lithographische Verfahren zur Herstellung von Peptidarrays bekannt, die auf photolabilen Schutzgruppen basieren, die durch die Bestrahlung mit Licht abgespalten werden, wie beispielsweise in Fodor, S.P.A., et al., "Light-Directed, Spatially Addressable Parallel Chemical Synthesis", Science, 1991, 251 (4995), 767-773 beschrieben.

Bekannte lithographische Methoden weisen einen prinzipiellen Nachteil auf. Für jedes der unterschiedlichen Monomere muss gesondert der Kopplungszyklus durchlaufen werden, d.h. jede Art von Monomer wird aufgebracht, gekoppelt und überschüssige Monomere werden weggewaschen, gefolgt von der nächsten Art von Monomer, so dass beispielsweise bei der kombinatorischen Peptidsynthese Schicht für Schicht jeweils 20 Kopplungszyklen durchlaufen werden müssen. Dies führt zu Qualitätsproblemen der resultierenden Molekülbibliotheken, da bei jedem Kopplungszyklus zu erwartende Nebenprodukte bzw. Artefakte entstehen können. Daher werden lithographische Verfahren bisher fast nur für die Synthese von Oligonukleotidarrays verwendet, da hierbei nur vier verschiedene Monomere an den Träger gekoppelt werden müssen.

Bislang ist bei den lithographischen Techniken zur Peptidarrayherstellung die Peptidausbeute auf Grund der komplexen Chemie folglich nicht hoch genug, um diese Technik zu etablieren.

WO 02/066550 A1 offenbart ein Verfahren zur Herstellung von Molekülarrays aus einem Biomaterial unter Verwendung der sogenannten LIFT-Technologie ("laser induced forward transfer"), um Biomoleküle von einem Ausgangsträger auf einen Zielträger aufzubringen. Im Vergleich zum herkömmlichen LIFT-Verfahren wird hier ein Matrix-Material verwendet, welches durch Lasereinstrahlung vom Ausgangsträger desorbiert wird, wobei ein Teil des Matrix-Materials verdampft wird, wodurch das restliche Material mitgerissen wird.

Neben den vorstehend erwähnten Methoden wurde die Ablagerung von Mikropartikeln in den Vertiefungen eines strukturierten Trägers in Yin, Y., et al., "Template-assisted self-assembly: a practical route to complex aggregates of monodispersed colloids with well-defined sizes, shapes, and structures", Journal of the American Chemical Society, 2001, 123 (36) 8718-8729 und in Kim, Y.H., et al., "Selective assembly of colloidal particles on a nanostructured template coated with polyelectrolyte multilayers", Advanced Materials, 2007, 19 (24) 4426-4430 vorgeschlagen.

Ausgehend hiervon liegt der vorliegenden Erfindung die Aufgabe zugrunde, ein Verfahren zur Herstellung von hochdichten Molekülarrays, insbesondere von Peptidarrays, bereitzustellen, welches die bekannten Nachteile und Einschränkungen des Stands der Technik überwindet.

Diese Aufgabe wird durch die in den Ansprüchen gekennzeichneten Gegenstände gelöst.

Insbesondere wird ein Verfahren zur Herstellung von hochdichten Molekülarrays mit einem Rastermaß von ≤ 300 µm bereitgestellt, wobei das Verfahren folgende Schritte umfasst:
(i) das Bereitstellen eines Zielträgers mit einer Vielzahl an diskreten Spots,
(ii) das Konditionieren ausgewählter Spots durch selektive und direkte Einwirkung elektromagnetischer Strahlung, und
(iii) das Umsetzen mindestens eines Monomers mit in den ausgewählten Spots des Zielträgers immobilisiert vorliegenden Reaktanden,
wobei mindestens ein Ausgangsträger mit einer Materialschicht in Form einer Partikelschicht oder Filmschicht bereitgestellt wird, die aus einer Polymermatrix besteht, in die das mindestens eine Monomer für die kombinatorische Synthese von Molekülarrays eingebettet ist,
wobei der Schritt (ii) des Konditionierens ausgewählter Spots das selektive Übertragen von Material mit den darin eingebetteten Monomeren vom Ausgangsträger auf den Zielträger und das ortsgenaue Fixieren dieses Materials mit den darin eingebetteten Monomeren auf dem Zielträger umfasst,
wobei das Übertragen und/oder Fixieren durch indirektes Erwärmen des Materials mittels elektromagnetischer Strahlung erfolgt, indem zwischen dem Ausgangsträger und der Materialschicht eine oder mehrere Zwischenschichten angeordnet sind, welche den Übertrag von Material unterstützen, oder indem Stoffe, die das Absorptionsverhalten beeinflussen, in der Polymermatrix eingebettet sind,
wobei die eine oder mehreren Zwischenschichten aus Kohlenstoff, einem Metall, Polyimid oder Polysiloxan bestehen,
wobei die Stoffe, die das Absorptionsverhalten beeinflussen, aus Graphitnanopartikeln, Rußpartikeln oder Fullerenen ausgewählt sind,
wobei als Quelle für die elektromagnetische Strahlung ein Dauerstrichlaser verwendet wird, und
wobei die Schritte (ii) und (iii) mit gleichen oder verschiedenen Ausgangsträgern iterativ durchgeführt werden.

Gemäß der vorliegenden Erfindung wird die Strukturierung des Zielträgers mit unterschiedlichen Monomeren für die kombinatorische Synthese erreicht, indem Partikel direkt beeinflusst und somit strukturiert werden, indem Partikel mittels elektromagnetischer Strahlung an definierten Orten fixiert und/oder zu definierten Orten transferiert werden.

Das erfindungsgemäße Verfahren zur kombinatorischen Strukturierung von Partikeln ("combinatorial particle patterning") vereint die technischen Vorteile der lithographischen und der partikelbasierten Strukturierungsmethoden und vermeidet gleichzeitig deren Nachteile, wie im Folgenden im Detail beschrieben wird.

Unter dem Begriff "Molekülarray" wird gemäß der vorliegenden Erfindung eine auf einem Träger gebundene Molekülbibliothek verstanden, wobei letztere die Gesamtheit von vielen unterschiedlichen, an definierten Orten des Trägers (sog. Spots) gebundene Moleküle einschließt. Dieser Träger, auf welchem die Moleküle gebunden sind, wird auch als Zielträger bezeichnet.

Gemäß der vorliegenden Erfindung ist es möglich einen hochdichten Molekülarray mit einem Rastermaß von ≤ 300 µm herzustellen. Dies bedeutet, dass der Abstand der einzelnen Spots, auch Pitch genannt, gemessen jeweils vom Mittelpunkt, ≤ 300 µm beträgt. Gemäß der vorliegenden Erfindung beträgt das Rastermaß des Molekülarrays vorzugsweise ≤ 200 µm, mehr bevorzugt ≤ 150 µm und besonders bevorzugt ≤ 100 µm.

Im Folgenden werden unter dem Begriff "Array" sowohl Träger, bei denen unterschiedliche Moleküle im Wesentlichen in nur zwei Dimensionen angeordnet sind, als auch poröse Träger oder Träger mit einer strukturierten Oberfläche verstanden, bei denen die unterschiedlichen Moleküle in einer zusätzlichen dritten Dimension vorliegen.

Ferner wird unter dem Begriff "diskreter Spot" ein Bereich eines (Ziel)-Trägers verstanden, der räumlich von benachbarten Spots getrennt ist. Dabei können gemäß der vorliegenden Erfindung die Spots sowohl aufgrund einer geometrischen Formgebung als auch aufgrund unterschiedlicher Oberflächeneigenschaften von den benachbarten Spots getrennt vorliegen. Beispielsweise können diese in Form dünner Trennwände oder mittels Stegstrukturen voneinander getrennt sein oder in Form von Vertiefungen vorliegen. Außerdem ist es möglich, dass die Spots beispielsweise aufgrund unterschiedlicher Benetzungseigenschaften der Oberfläche des Trägers als diskrete Bereiche vorliegen.

Gemäß der vorliegenden Erfindung wird die Strukturierung des Zielträgers mit unterschiedlichen Monomeren für die kombinatorische Synthese erreicht, indem Partikel mittels elektromagnetischer Strahlung an definierten Orten fixiert und/oder zu definierten Orten transferiert werden.

Insbesondere umfasst diese Ausführungsform der vorliegenden Erfindung die vorstehend definierten Schritte (i) des Bereitstellens eines Zielträgers mit einer Vielzahl an diskreten Spots, (ii) des Konditionierens ausgewählter Spots durch selektive und direkte Einwirkung elektromagnetischer Strahlung, und des Umsetzens mindestens eines Monomers mit in den ausgewählten Spots des Zielträgers immobilisiert vorliegenden Reaktanden, wobei mindestens ein Ausgangsträger mit einer Materialschicht in Form einer Partikelschicht oder Filmschicht bereitgestellt wird, in der das mindestens eine Monomer enthalten ist, und wobei der Schritt (ii) des Konditionierens ausgewählter Spots das selektive Übertragen von Material vom Ausgangsträger auf den Zielträger und das ortsgenaue Fixieren dieses Materials auf dem Zielträger umfasst, wobei das Übertragen und/oder Fixieren mittels elektromagnetischer Strahlung erfolgt.

Bei diesem Verfahren wird ein Ausgangsträger verwendet, der gleichmäßig mit einer Partikelschicht als Materialschicht belegt ist. Diese Partikelschicht enthält Monomere, beispielweise in Form von Monomerpartikeln, für die kombinatorische Synthese von Molekülarrays. Erfindungsgemäß werden unter dem Begriff Monomerpartikel solche Partikel verstanden, die Monomere oder andere chemische Bausteine für die Herstellung von Molekülarrays enthalten. Diese Monomerpartikel bestehen dabei im Wesentlichen aus einer Polymermatrix, in die geeignete chemische Bausteine bzw. Monomere für die kombinatorische Synthese von Molekül-, insbesondere von Peptid- oder von Oligonukleotidarrays, eingebettet sind. Diese Monomere können zum Beispiel Aminosäurederivate zur Synthese von Peptidarrays sein.

Als Polymermatrix können gemäß der vorliegenden Erfindung beispielsweise Polymere wie Polystyrol-n-Butylacrylat-Copolymere, Styrol-Acrylat-Copolymere, Polydimethylacrylamid, Polyester- und Epoxyharze verwendet werden, ohne auf diese beschränkt zu sein.

Des Weiteren können den Monomerpartikeln weitere Stoffe zugesetzt werden, mit der Einschränkung, dass diese die kombinatorische Kupplungsreaktion nicht stören dürfen. Für die Peptidsynthese dürfen diese Bestandteile insbesondere keine NH₂-oder SH-Gruppen enthalten, für die Oligonukleotidsynthese sollten sie zusätzlich auch keine OH-Gruppen enthalten. Beispielsweise können den Monomerpartikeln Eisenkomplexe zugesetzt werden, um die elektrische Aufladung der Monomerpartikel einzustellen oder Stoffe, die das Absorptionsverhalten beeinflussen. Diese Aufgabe kann durch eine Vielzahl von chemisch inerten und gleichzeitig Licht absorbierenden Substanzen übernommen werden, wie beispielsweise Graphitnanopartikeln, Rußpartikeln oder Fullerenen.

Alternativ zu einem Ausgangsträger mit einer Schicht aus Monomerpartikeln, kann gemäß der vorliegenden Erfindung ein Ausgangsträger verwendet werden, der mit einem gleichmäßigen Monomerfilm belegt ist, der wie die Monomerpartikel aus einer Polymermatrix besteht und in welchen Monomere sowie gegebenenfalls weitere Stoffe wie Absorbermaterialien eingebettet sind. Bei ausreichender mechanischer Stabilität der Polymermatrix kann auch eine selbst tragende Folie oder ein Block aus den genannten Materialien eingesetzt werden.

Entsprechend wird unter dem Begriff Monomerfilm eine Materialschicht verstanden, die Monomere oder andere chemische Bausteine für die Herstellung von Molekülarrays enthält.

Wie bereits vorstehend beschrieben liegt gemäß der vorliegenden Erfindung die Materialschicht auf dem Ausgangsträger in Form einer Partikelschicht oder Filmschicht vor. In dieser Ausführungsform wird das Material mit den darin eingebetteten Monomeren selektiv vom Ausgangsträger auf den Zielträger übertragen, wo dieses ortsgenau fixiert wird. Das Übertragen des Materials, d.h. der in der Polymermatrix eingebetteten Monomere, ist gemäß der vorliegenden Erfindung nicht auf eine Partikelform beschränkt. Im Rahmen dieser Ausführungsform umfasst das Übertragen des Materials sowohl das Übertragen von Partikeln als auch das Übertragen des Materials in flüssiger oder gasförmiger Form.

Gemäß der vorliegenden Erfindung wird das Material mit den darin eingebetteten Monomeren von einem entsprechend präparierten Ausgangsträger mit Hilfe von elektromagnetischer Strahlung auf einen Zielträger übertragen und dort selektiv und ortsgenau fixiert. Erfindungsgemäß wird dieser Vorgang vorteilhaft mit unterschiedlichen Ausgangsträgern aber gleichem Zielträger wiederholt. Somit können auf einem Zielträger unterschiedliche Monomere an frei wählbaren Orten kombinatorisch ortsgenau fixiert werden. Diese Monomere gehen in einem weiteren Prozessschritt parallel eine chemische Reaktion mit auf dem Zielträger aufgebrachten funktionellen Gruppen ein. Dies sind insbesondere NH₂-Gruppen für die Synthese von Peptidarrays oder OH-Gruppen für die Synthese von Oligonukleotidarrays. Die Kupplungsreaktion kann dadurch gestartet werden, dass die ortsgenau fixierten Materialien erhitzt werden oder durch eine Chemikalie gelöst werden, sodass die eingebetteten Monomere mobilisiert werden und zur Oberfläche des Trägers diffundieren können, wo sie mit den funktionellen Gruppen der dort immobilisierten Reaktanden abreagieren. Besonders vorteilhaft ist dieses Verfahren, wenn dabei die Diffusion der erwähnten Monomere eingeschränkt bleibt, indem die aufgebrachten Materialien eine ölige oder wachsähnliche Konsistenz einnehmen.

Die Vorbereitung der Ausgangsträger, das bedeutet die Erzeugung einer homogenen Schicht aus Monomerpartikeln oder eines Monomerfilms, kann auf verschiedene Arten erfolgen. Die Monomerpartikel können zum Beispiel aus einem Aerosol oder einer Suspension auf dem Ausgangsträger abgelagert werden. Die Monomerpartikel können von der Oberfläche einer Flüssigkeit abgehoben oder abgeschöpft werden oder mit einer Rakel oder einer Walze auf den Ausgangsträger aufgetragen werden. Sofern die Monomerpartikel elektrisch geladen sind, können elektrische Felder zur Ablagerung eingesetzt werden.

Die Beschichtung mit einem homogenen Film auf einem Träger kann zum Beispiel mit Hilfe von Rotationsbeschichtung, durch Tauchbeschichtung oder den Einsatz einer Rakel oder Walze geschehen. Der Monomerfilm kann jedoch auch in einem separaten Prozess hergestellt werden und beispielsweise auf den Ausgangsträger aufgeklebt werden. Zudem kann der Monomerfilm in einem Druckverfahren, wie beispielsweise Tintenstrahldruck, auf den Ausgangsträger aufgebracht werden.

Gemäß der vorliegenden Erfindung ist das Material des Ausgangsträgers nicht beschränkt und kann je nach Zielmolekül ausgewählt werden. Diese Materialien sind dem Fachmann bekannt und müssen daher nicht im Detail beschrieben werden. Als nichtbeschränkende Beispiele seien polymere, keramische oder metallische Materialien genannt. Beispielsweise können insbesondere Träger aus Polydimethylsiloxan vorteilhaft verwendet werden. Für den Zielträger wird auf die nachstehenden Ausführungen verwiesen.

Der Ausgangträger als auch der Zielträger können mit einer Strukturierung versehen sein, zum Beispiel mit Vertiefungen im Mikrometermaßstab. Diese Strukturierung kann den gezielten Materialtransfer ermöglichen oder verbessern. Weist der Ausgangsträger eine Strukturierung auf, so kann es sinnvoll sein, diesen nicht homogen mit einer Beschichtung zu überziehen, sondern die Beschichtung entsprechend der Strukturierung anzupassen, also zum Beispiel nur die Vertiefungen im Ausgangsträger mit Monomerpartikeln zu füllen. Durch das Auffüllen von Strukturen auf dem Ausgangsträger kann das zu übertragende Material portioniert werden, bis hin zu einzelnen Mikropartikeln pro Vertiefung.

Durch Strukturierung des Zielträgers kann eine örtliche Begrenzung des Übertrags stattfinden, sodass beim Übertrag beispielsweise nur einzelne oder eine bestimmte Anzahl von Strukturen auf dem Zielträger mit Material des Ausgangsträgers gefüllt oder bedeckt werden.

Gemäß einer bevorzugten Ausführungsform der vorliegenden Erfindung kommen mindestens eine oder mehrere Zwischenschicht(en) zum Einsatz, welche zwischen dem Ausgangsträger und dem Zielträger angeordnet ist bzw. sind. Vorzugsweise befindet sich die mindestens eine Zwischenschicht zwischen dem Ausgangsträger und der Materialschicht, d.h. der Schicht aus Monomerpartikeln bzw. dem Monomerfilm.

Die mindestens eine Zwischenschicht ist nicht speziell eingeschränkt und kann beispielsweise aus Mikro- oder Nanopartikeln, einem festen Film oder einer Flüssigkeit bestehen. Diese Zwischenschicht kann die Funktion haben, die Monomere auf dem Ausgangsträger oder den Zielträger und die darauf befindlichen Reaktanden vor den Einwirkungen der elektromagnetischen Strahlung zu schützen. Dies gilt auch für indirekte Einwirkungen wie zum Beispiel Hitze, Dämpfe, Gase oder Plasma, die durch die elektromagnetische Strahlung erzeugt werden oder chemische Reaktionen, die durch die elektromagnetische Strahlung ausgelöst werden. Die mindestens eine Zwischenschicht kann ferner die Funktion haben, die Haftung weiterer Zwischenschichten oder die Haftung der Materialschicht auf dem Ausgangsträger einzustellen, beispielsweise in Form von Klebeschichten.

Gemäß einer weiteren Ausführungsform I unterstützt die mindestens eine Zwischenschicht den Übertrag von Material vom Ausgangsträger auf den Zielträger . Kommen eine oder mehrere derartiger Zwischenschichten zum Einsatz, so können die Monomerpartikel oder der Monomerfilm durch Erwärmen dieser Zwischenschicht(en), welche beispielsweise aus Kohlenstoff oder einem Metall besteht bzw. bestehen, indirekt erwärmt werden.

Gemäß der vorliegenden Erfindung werden dabei metallische oder elementare Zwischenschichten eingesetzt , wie z. B. aus Titan, Chrom, Gold, Kupfer, Wolfram, Palladium, Silber, Kohlenstoff, oder Polyimid oder Polysiloxan. Dabei können mehrere Zwischenschichten aus gleichem oder verschiedenem Material in Kombination verwendet werden, um die vorstehend erwähnten Effekte zu verstärken bzw. zu kombinieren.

Für den Übertrag von Material sind verschiedene Mechanismen möglich, die im Folgenden im Detail beschrieben werden. Die verwendeten Materialen, die Wellenlänge und die Einstrahlrichtung der elektromagnetischen Strahlung werden jeweils in geeigneter Weise gewählt. Die Einstrahlrichtung kann insbesondere vom Ausgangsträger in Richtung Zielträger erfolgen oder vom Zielträger in Richtung Ausgangsträger.

Erfindungsgemäß kann das Übertragen und Fixieren des Materials vom Ausgangsträger auf den Zielträger durch das Inkontaktbringen des Ausgangsträgers mit dem Zielträger und das indirekte Erwärmen der Partikel- oder Filmschicht durch die selektive und direkte Einwirkung der elektromagnetischen Strahlung erfolgen, wobei sich die Materialschicht zwischen den Trägern befindet.

Dabei wird ein fester Ausgangsträger, belegt mit einer Schicht aus Monomerpartikeln oder einem Monomerfilm, in Kontakt mit einem festen Zielträger gebracht, sodass sich die Beschichtung zwischen den beiden Trägern befindet. Mit elektromagnetischer Strahlung wird selektiv an bestimmen Orten Energie eingebracht. Das Matrixmaterial mitsamt den darin enthaltenen Substanzen wird auf dem Zielträger fixiert.

Durch geeignete Wahl der Einstrahlrichtung, der Materialien und der Wellenlänge der elektromagnetischen Strahlung wird die Materialschicht, insbesondere in Form der Monomerpartikel oder des Monomerfilms, indirekt erwärmt, indem eine oder mehrere wie vorstehend erwähnte Zwischenschichten (z.B. aus Kohlenstoff oder Metall) oder einer bzw. beide Träger durch die Strahlung erwärmt werden. Ein indirektes Erwärmen der Partikel oder des Films kann auch erreicht werden, indem dieser mit einem Zusatz, wie zum Beispiel Graphitnanopartikeln, vermischt wird, der als Absorber dient. Das fixierte Material verbleibt nach der Trennung der beiden Träger am Zielträger.

Vorzugsweise kann der/können die Träger auch aus einem flexiblen Material gefertigt sein, um einen besseren Kontakt zu gewährleisten. Durch die chemische Modifikation und/oder Nano- und/oder Mikrostrukturierung der Trägeroberflächen kann erreicht werden, dass die erwärmten Partikel bzw. das Material des Films vorzugsweise am Zielträger haftet.

Um die Kontaktfläche des Zielträgers mit der Beschichtung des Ausgangsträgers zu vergrößern können der Zielträger und/oder der Ausgangsträger Vibrationen ausgesetzt werden oder zu mechanischen Schwingungen angeregt werden.

Gemäß einer weiteren Ausführungsform kann das Übertragen und Fixieren des Materials vom Ausgangsträger auf den Zielträger auch ohne direkten Kontakt der Träger erfolgen. Insbesondere kann das Übertragen des Materials vom Ausgangsträger auf den Zielträger durch Volumenausdehnung der Materialschicht oder der optionalen mindestens einen Zwischenschicht erfolgen, sodass durch die Volumenausdehnung Material vom Ausgangsträger auf den Zielträger befördert wird. Wie bereits beschrieben, ist in diesem Fall ein direkter Kontakt zwischen dem Ausgangsträger und dem Zielträger nicht zwangsweise notwendig, jedoch nicht ausgeschlossen.

Eine weitere Ausführungsform besteht darin, dass sich durch die vorstehend beschriebene Volumenausdehnung bei geeigneter Wahl der mindestens einen Zwischenschicht, wie z. B. Polyimid, und der Materialschicht eine Blase bildet, die das zu übertragende Material in Richtung auf den Zielträger befördert.

Auf dem Zielträger wird das übertragene Material fixiert, indem durch elektromagnetische Strahlung lokal begrenzt Energie eingebracht wird. Wie bereits beschrieben, findet eine indirekte Erwärmung des Materials statt. Hierfür können die Parameter der Strahlenquelle wie Wellenlänge, Energie, Pulsdauer, Fokusgröße und Fokusebene geändert werden oder es wird eine geeignete zweite Strahlenquelle verwendet.

Alternativ wird eine Fixierung des Materials auf dem Zielträger allein durch geeignete Wahl des Polymermatrixmaterials und/oder des Zielträgermaterials erreicht, sodass diese bei Kontakt aneinander haften oder kleben.

Gemäß einer weiteren Ausführungsform kann der Übertrag des Materials vom Ausgangsträger auf den Zielträger auch dadurch unterstützt werden, dass zwischen den beiden Trägern ein elektrisches Feld erzeugt wird. In diesem Fall muss das Matrixmaterial vorher durch ein geeignetes Verfahren beispielsweise triboelektrisch oder durch einen Coronadraht elektrisch aufgeladen werden, wodurch im Falle von Monomerpartikeln diese durch die elektrische Kraft in Richtung des Zielträgers gesteuert werden.

Ferner kann der Übertrag des Materials vom Ausgangsträger auf den Zielträger auch dadurch unterstützt werden, dass zwischen den beiden Trägern ein magnetisches Feld erzeugt wird. In diesem Fall muss das Matrixmaterial einen magnetischen Bestandteil, wie beispielsweise Magnetit, enthalten. In diesem Fall werden beispielsweise die Monomerpartikel durch die magnetische Kraft in Richtung des Magnetfeldgradienten gesteuert.

Um Adhäsionskräfte zwischen den Monomerpartikeln und/oder zwischen dem Matrixmaterial und Trägern zu verringern und den Übertrag zu erleichtern, ist es bevorzugt, dass der Raum zwischen den Trägern und/oder zwischen den Monomerpartikeln mit einer Flüssigkeit gefüllt ist.

Enthalten die Monomerpartikel Vorstufen von für eine kombinatorische Synthese geeigneten Monomeren, Dimeren oderTrimeren, so können durch ein oder mehrere weitere Zyklen von Kopplungsreaktionen die an den Träger gebundenen Moleküle um weitere Monomere, Dimere oder Trimere verlängert werden. Auch ist es möglich, durch ein oder mehrere weitere Zyklen von nicht notwendigerweise identischen Reaktionen die an den Träger gebundenen Moleküle zu modifizieren. Nach erfolgter Synthese können die Schutzgruppen von den synthetisierten Oligomeren abgespalten werden, wobei die synthetisierten Moleküle an dem Träger gebunden bleiben und gegebenenfalls für den nachfolgenden Kopplungsschritt zur Verfügung stehen.

Erfindungsgemäß kann auf im Stand der Technik bekannte Schutzgruppen-Techniken zurückgegriffen werden, die insbesondere im Bereich der Synthese von Biomolekülen wie Peptiden, Oligosacchariden oder Nukleotiden bzw. in der kombinatorischen Chemie im Allgemeinen etabliert sind. Das heißt gemäß der vorliegenden Erfindung können an geeigneter Stelle des Verfahrens eine oder mehrere Schutzgruppe(n), die gegebenenfalls in einem Monomer für die kombinatorische Synthese vorhanden sind, entfernt werden, um weitere Kopplungsschritte zu ermöglichen. Gemäß der vorliegenden Erfindung können als Zielträger unterschiedliche Materialien verwendet werden, wie beispielsweise Polystyrolfolien, Papier, CDs, MODs, DVDs oder FMDs. Insbesondere eignen sich funktionalisierte Glasträger, wie z.B. Glaswafer, die auf einer Oberfläche beispielsweise mittels lithographischem Verfahren eine Strukturierung aufweisen. Auch poröse Glasträger können erfindungsgemäß verwendet werden.

Gemäß dieser Ausführungsform des vorstehend definierten Verfahrens werden die Schritte des Konditionierens der ausgewählten Spots (Schritt (ii)) und des Umsetzens des mindestens einen Monomers mit in den ausgewählten Spots des Zielträgers immobilisiert vorliegenden Reaktanden (Schritt (iii)) iterativ unter Verwendung jeweils gleicher oder verschiedener Monomere durchgeführt. Dadurch ist es möglich, kostengünstig und effizient hochdichte Molekülarrays herzustellen.

Als Quelle für die verwendete elektromagnetische Strahlung werden gemäß der vorliegenden Erfindung Dauerstrichlaser verwendet. I Um die Strahlung ortsgenau auf einen Punkt zu fokussieren ist ein geeignetes Linsensystem notwendig. Es können der Zielträger und/oder der Ausgangsträger gegenüber der Strahlenquelle mechanisch verfahren werden oder die elektromagnetische Strahlung wird über geeignete Spiegel positioniert. Dies hat den Vorteil, dass pro Zeiteinheit eine größere Anzahl von Punkten bearbeitet werden kann.

Um die Geschwindigkeit des Verfahrens zu erhöhen kann vorzugsweise parallel mit mehreren Strahlenquellen gearbeitet werden oder der Strahl einer Strahlenquelle wird über ein geeignetes System, wie beispielsweise einem Linsenarray oder einem Spiegelarray, in mindestens zwei Teilstrahlen aufgespaltet. Die Teilstrahlen können individuell in ihrer Intensität moduliert werden.

Erfindungsgemäß wird ferner ein hochdichter Molekülarray mit einem Rastermaß von ≤ 300 µm bereitgestellt, der mit dem vorstehend beschriebenen Verfahren erhältlich ist. Gemäß der vorliegenden Erfindung beträgt das Rastermaß des Molekülarrays vorzugsweise ≤ 200 µm, mehr bevorzugt ≤ 150 µm und besonders bevorzugt ≤ 100 µm.

Wie vorstehend erwähnt handelt es sich bei den erfindungsgemäßen Arrays vorzugsweise um Peptid- oder Oligonukleotidarrays, insbesondere um Peptidarrays.

Die vorliegende Erfindung basiert darauf, Partikel auf einem Träger mit Hilfe elektromagnetischer Strahlung zu strukturieren, um die kombinatorische Synthese von hochdichten Molekül-, insbesondere von Peptid- oder Oligonukleotidarrays zu ermöglichen. Die elektromagnetische Strahlung wirkt dabei direkt auf die Partikel ein und steuert somit die Kraft bei, mit der die Partikel bewegt werden. In einer Ausführungsform werden die Monomere als Monomerpartikel direkt strukturiert, indem Monomerpartikel direkt auf die Spots eines Trägers transferiert und dort selektiv fixiert werden.

Da das kleinste Rastermaß für die Partikelablagerung nur von der Partikelgröße, dem Fokusdurchmesser der elektromagnetischen Strahlung und der Größe etwaiger Strukturen auf dem Träger, wie zum Beispiel Vertiefungen, begrenzt ist, können vorteilhaft Partikelmuster mit einem Raster ≤ 300 µm, insbesondere bis zu ≤ 100 µm realisiert werden.

Zudem besteht erfindungsgemäß eine sehr hohe Flexibilität gegenüber der Anzahl der verwendeten chemischen Bausteine. Wird deren Anzahl erhöht, so lässt sich dies ohne zusätzlich Aufwand, beispielsweise bezüglich der Kalibrierung, in das bestehende Verfahren einbinden.

In der vorliegenden Erfindung werden keine Partikelreservoirs verwendet. Die Beschichtung mit Monomerpartikeln oder einem Monomerfilm erfolgt in einem separaten Prozessschritt. So können zum Beispiel ungenügend beschichtete Träger aussortiert oder erneut bearbeitet werden. Probleme und Verzögerungen im Prozess, hervorgerufen durch Schwankungen in der Beschichtungsqualität, wie sie insbesondere bei der selektiven Beschichtung der Hochspannungs-CMOS-Chips auftreten, können so vorteilhaft eliminiert werden. Das erfindungsgemäße Verfahren wird somit sehr robust.

Darüber hinaus ist die Fläche der erzeugten Partikelmuster prinzipiell nicht begrenzt, da über die Ablenkung der elektromagnetischen Strahlung mit Spiegeln, sowie mechanisches Verfahren prinzipiell auch sehr große Träger bearbeitet werden können.

Das erfindungsgemäße Verfahren kombiniert die Vorteile lithographischer Methoden (sehr kleine Strukturen, die zu sehr kleinen Peptid- oder Oligonukleotidspots führen) und der partikelbasierten Methoden (einfache Strukturierung über größere Flächen auf Grund von Selbstorganisation möglich; Robustheit; zeitliche und räumliche Trennung der Strukturierung und der Kupplungsreaktion an den Träger), vermeidet aber gleichzeitig deren Nachteile (Nebenreaktionen auf Grund der vielen sequenziell durchgeführten Kupplungsreaktionen bei den lithographischen Techniken bzw. große Raster bei den bisherigen partikelbasierten Techniken).

Da die vorliegende Erfindung es ermöglicht, Partikelmuster mit einem sehr kleinen Rastermaß, das heißt mit sehr hoher Auflösung und auf einer sehr großen Fläche herzustellen, können die dadurch erzeugten Molekülarrays somit äußerst effizient in Hochdurchsatzscreenings eingesetzt werden. Bei den Hochdurchsatzscreenings kommt es maßgeblich darauf an, möglichst viele verschiedene Moleküle parallel und kostengünstig auf gewisse Eigenschaften zu untersuchen.

Durch die praktisch unbegrenzte Anzahl von Monomeren, die im erfindungsgemäßen Verfahren eingesetzt werden können, kann die Vielfalt der erzeugten Molekülarrays erhöht werden, was diese wiederum interessanter für verschiedenste Hochdurchsatzscreenings macht.

Die vorliegende Erfindung sowie weitere sich daraus ergebende Vorteile werden in der nachfolgenden Beschreibung unter Bezugnahme auf die in den Beispielen beschriebenen Ausführungsformen näher erläutert.

Die Figuren zeigen:

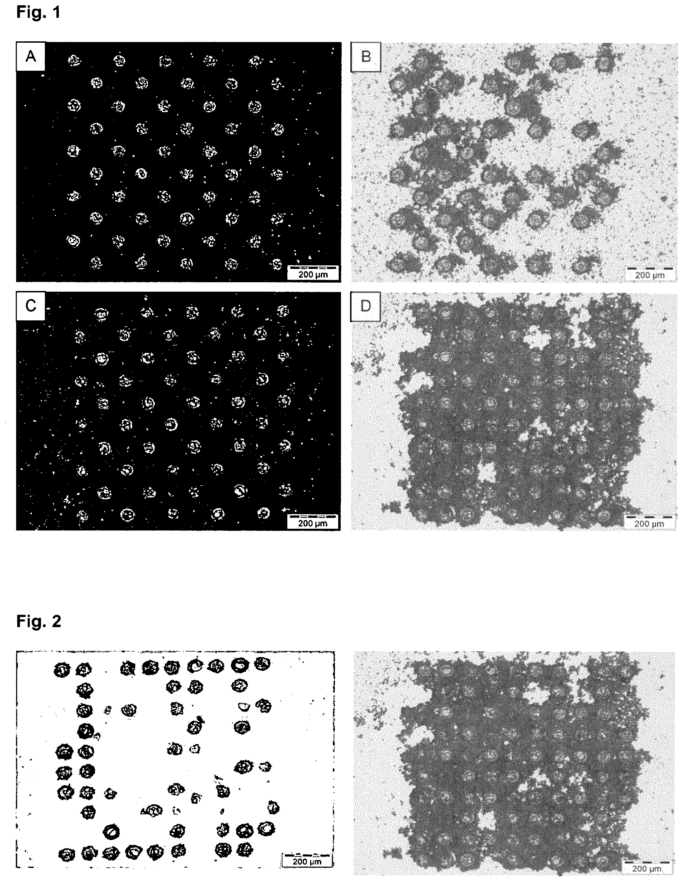

- **Fig. 1**: Übertrag von Material aus einer Partikelschicht von einem PDMS-Aus-gangsträger auf einen Zielträger, A) Ausgangsträger und Zielträger befinden sich in Kontakt, Punktmuster wurde durch Erhitzen mit einem Laser erzeugt, B) Zielträger mit übertragenem Material, C) Zielträger befindet sich in Kontakt mit zweitem Ausgangsträger, ein zweites Punktmuster wurde durch Erhitzen mit einem Laser erzeugt, D) Zielträger mit Material aus dem erstem und dem zweitem Übertrag.
- **Fig. 2**: Zielträger vor (links) und nach (rechts) dem Reinigen in einem Ultraschallbad. Kontaminationen in nicht bestrahlten Bereichen konnten so deutlich reduziert werden.

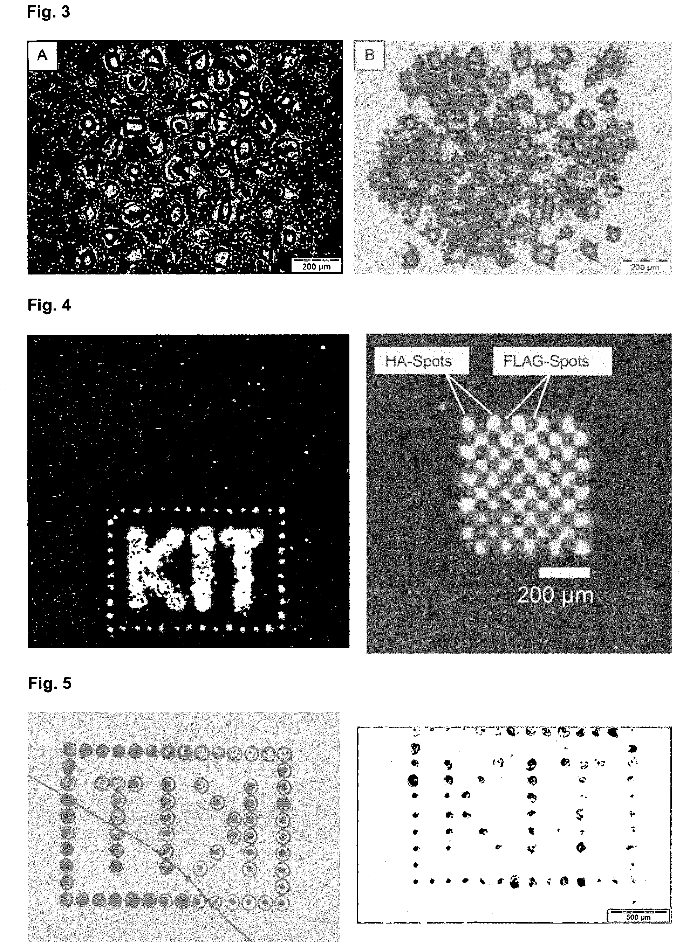

- **Fig. 3**: A) Zielträger mit Partikelschicht, die mit Hilfe eines elektrischen Feldes vom Ausgangsträger übertragen wurde. Bestimmte Bereiche wurden selektiv mit dem Laser fixiert, B) nach Entfernen der Partikelschicht mit Druckluft.
- **Fig. 4**: Fluoreszenzmarkierte Peptide (HA: hell, FLAG: dunkel), Synthetisiert mit Hilfe der laserbasierten Partikelstrukturierung, links: KIT aus FLAG-Spots mit Rahmen aus HA-Spots, rechts: FLAG und HA im Schachbrettmuster.
- **Fig. 5**: Übertrag von Aminosäurederivaten eingebettet in eine Copolymer Matrix, aus einem festen Monomerfilm auf einen Zielträger aus Glas, A) Ausgangsträger: Auflichtmikroskopaufnahme, Monomerfilm mit fehlendem Material, B) Zielträger: Durchlichtmikroskopaufnahme, Glasträger mit Muster aus übertragenem Material.

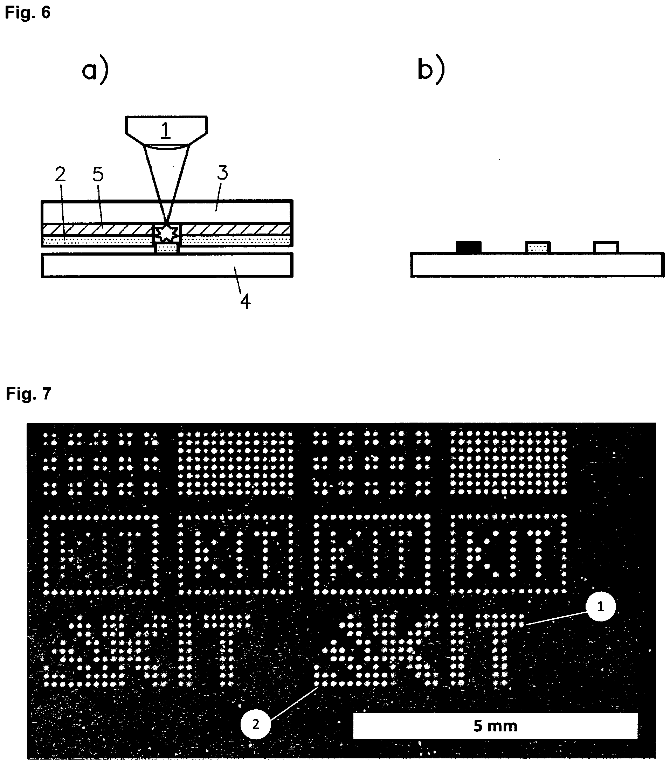

- **Fig. 6**: Schemazeichnung. a) Mit einem Laser (1) wird Material aus einem Monomerfilm (2) von einem Ausgangsträger (3) auf einen Zielträger (4) übertragen. Zwischen dem Monomerfilm und dem Ausgangsträger befindet sich eine Zwischenschicht (5). b) Nach mehreren Iterationen mit verschiedenen Ausgangsträgern entsteht auf dem Zielträger ein Muster aus verschiedenen Monomeren in Form diskreter Spots.
- **Fig. 7**: Fluoreszenzaufnahmen eines Peptidarrays mit einem Rastermaß von 150 µm bestehend aus den Peptiden FLAG und HA. Das Array wurde mit fluoreszenzmarkiertem anti-HA (1) und fluoreszenzmarkiertem anti-FLAG (2) detektiert.

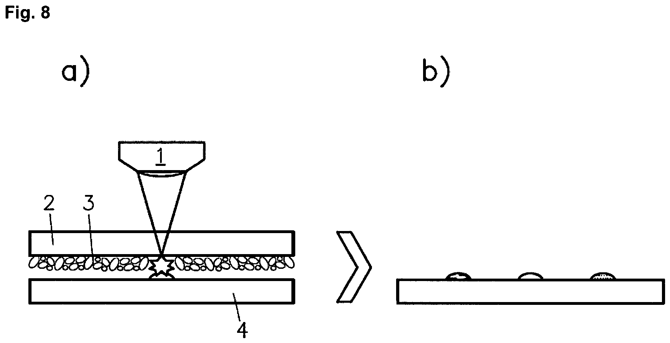

- **Fig. 8**: Schemazeichnung. a) Mit einem Laser (1) wird Material von einem Ausgangsträger (2) in Form von Partikeln aus einer Partikelschicht (3) auf einen Zielträger (4) übertragen. b) Nach mehreren Iterationen mit verschiedenen Ausgangsträgern entsteht auf dem Zielträger ein Muster aus verschiedenen Monomeren in Form diskreter Spots.

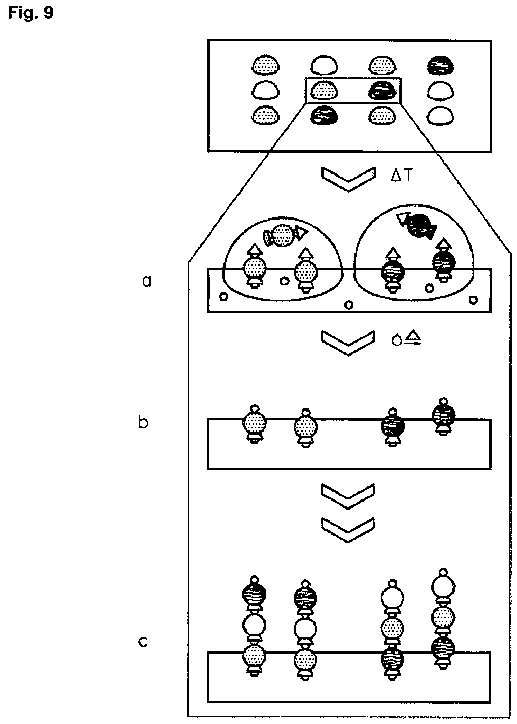

- **Fig. 9**: Synthese eines Peptidarrays ausgehend von einem Zielträger auf dem Material mit unterschiedlichen Aminosäurederivaten in einem kombinatorischen Muster platziert wurde. a) Der Träger wird erhitzt, so dass die Polymermatrix des Materials schmilzt und die Aminosäurederivate zur Trägeroberfläche diffundieren können, um dort chemisch zu binden. b) In verschiedenen Waschschritten werden die Polymermatrix und überschüssige Monomere entfernt. Freie Aminogruppen werden blockiert und die N-terminale Schutzgruppe an den Aminosäuren wird entfernt. c) Durch mehrmaliges Durchlaufen des Prozesses entsteht ein Peptidarray.

### Beispiele

In den folgenden Beispielen werden verschiedene Experimente zum Übertrag von Monomerpartikeln (siehe (1) und (2)) sowie zum Übertrag von Material aus einem Monomerfilm (siehe (4)) gezeigt. Zudem werden Beispiele für die Synthese von Molekülarrays gezeigt (siehe (3) und (5)).

### (1) Kombinatorischer Übertrag von Monomerpartikeln von einem PDMS Ausgangsträger auf einen Glasobjektträger nach dem in Fig. 8 dargestellten Schema

Monomerpartikel (mittlerer Durchmesser ca. 8,8 µm) bestehend aus einem Styrol-Acrylat-Copolymer und Graphitnanopartikeln wurden aus einem Aerosol auf einem Träger aus Polydimethylsiloxan (PDMS) abgelagert. Dieser Träger diente als Ausgangsträger und wurde mit leichtem mechanischem Druck in Kontakt mit einem Zielträger aus Glas gebracht. Mit einem Laser (Wellenlänge 810 nm, Leistung bis 100 mW, Fokusdurchmesser 7,5 µm) wurden bestimmte Bereiche selektiv für jeweils 10 ms erhitzt (siehe Fig. 1A). Wie in Fig. 1B zu erkennen ist, verbleiben nach Trennung der beiden Träger die geschmolzenen Bereiche auf dem Zielträger. Mit einem zweiten Ausgangsträger wurden diese Schritte erfolgreich wiederholt (Fig.1C und D). Insgesamt wurden so ca. 85 % der bestrahlten Spots übertragen.

Partikelkontaminationen in den nicht bestrahlten Bereichen des Zielträgers wurden zwischendurch mit Druckluft entfernt, was aber nicht vollständig gelang. Stattdessen kann dafür, wie in Fig. 2 gezeigt, auch ein Ultraschallbad eingesetzt werden, womit eine fast vollständige Entfernung der Kontaminationen erzielt wird.

### (2) Übertrag von Mikropartikeln mit Hilfe eines elektrischen Feldes und selektives Fixieren mit Laserstrahlung

Monomerpartikel (mittlerer Durchmesser ca. 8,8 µm) aus einem Styrol-Acrylat-Copolymer und Graphitnanopartikeln wurden aus einem Aerosol auf einen Ausgangsträger aus Glas aufgetragen. Durch die auftretende Reibung im Aerosolgenerator wurden die Partikel elektrisch geladen. Anschließend wurde parallel zum Ausgangsträger im Abstand von ca. 160 µm der Zielträger aus Glas positioniert. Durch das Anlegen eines elektrischen Feldes wurde ein Teil der Partikel auf den Zielträger übertragen, sodass sich auf diesem eine geschlossene Partikelschicht befand. Mit einem Laser wurden selektiv bestimmte Bereiche der Partikelschicht bestrahlt (siehe Fig. 3A). Anschließend wurde die Partikelschicht auf dem Zielträger mit Druckluft entfernt. Die erhitzten Bereiche der Partikelschicht verblieben auf dem Zielträger (siehe Fig. 3B). Dieses Prinzip konnte ein zweites Mal wiederholt werden, wobei andere Bereiche des Zielträgers bestrahlt wurden.

### (3) Kombinatorische Synthese von Peptiden mit laserstrukturierten Monomerpartikeln

Es konnte experimentell gezeigt werden, dass es möglich ist, mit Hilfe von Aminosäurepartikeln, die mit einem Laser auf einem Substrat strukturiert wurden, Peptide zu synthetisieren.

Für das Experiment wurden die beiden Peptide FLAG (Aminosäuresequenz: Asp-Tyr-Lys-Asp-Asp-Asp-Asp-Lys) und HA (Aminosäuresequenz: Tyr-Pro-Tyr-Asp-Val-Pro-Asp-Tyr-Ala) ausgewählt. Monomerpartikel (mittlerer Durchmesser ca. 5 µm) hergestellt aus einem Styrol-Acrylat-Copolymer als Matrix, Aminosäurederivaten und Graphit als Absorber, wurden aus dem Aerosol auf einem funktionalisierten Glasträger abgelagert. Mit einem Laser (Wellenlänge 810 nm, Leistung bis 100 mW, Fokusdurchmesser 7,5 µm, Pulsdauer 10 ms) wurden die Partikel selektiv erhitzt und so auf dem Träger fixiert. Nicht fixierte Partikel wurden mit Druckluft entfernt.

Diese Laserstrukturierung wurde mit den entsprechenden Monomerpartikeln für die erste Aminosäure des FLAG-Peptids, sowie für die erste Aminosäure des HA-Peptids durchgeführt. Anschließend folgten die Prozessschritte, die in Abbildung 9 schematisch dargestellt sind. Der Träger wurde in Stickstoffatmosphäre für 90 min auf 90°C erhitzt. Die Aminosäurederivate in der Matrix diffundieren in dieser Zeit zum Substrat und kuppeln dort chemisch an die vorhandenen NH₂-Gruppen.

Die Copolymermatrix, überschüssige Aminosäuren sowie alle anderen Bestandteile wurden anschließend durch Waschen mit Dimethylformamid (DMF) entfernt. Noch freie NH₂-Gruppen wurden blockiert und anschließend die Fmoc-Schutzgruppen an den C-terminalen Enden der Aminosäuren entfernt.

Der Prozess wurde mehrmals, mit denen der Sequenz entsprechenden Aminosäuren, durchlaufen, bis die Peptide vollständig synthetisiert waren. Zur Kontrolle der Syntheseprodukte wurde der Träger anschließend mit fluoreszenzmarkierten Anti-HA-Antikörpern sowie mit fluoreszenzmarkierten Anit-FLAG-Antikörpern markiert (siehe Figur 4).

### (4) Übertrag von Material aus einem zusammenhängenden Film

Es wurde nach dem in Fig. 6 dargestellten Schema vorgegangen, um Material aus einem Monomerfilm zu übertragen. Anders als in Fig. 6 dargestellt, war der Laser in diesem Experiment hinter dem Zielträger positioniert, so dass der Laserstrahl durch den Zielträger auf den Ausgangsträger einwirkte. Des Weiteren wurde in diesem Experiment auf die Verwendung einer Zwischenschicht verzichtet.

Zunächst wurde ein zusammenhängender Monomerfilm auf einem Ausgangsträger aus Glas erzeugt, indem ein Gemisch aus Styrol-Acrylat-Copolymer, Fmoc-Glycin-Opfp-Ester und Graphitnanopartikeln erhitzt und mit einer Rakel glatt gezogen wurde. Dieser Ausgangsträger wurde nach dem Abkühlen in Kontakt mit dem Zielglasträger gebracht und mit einem Laser (Wellenlänge 810 nm, Leistung 100 mW, Pulsdauer 10 ms, Laserfokusdurchmesser 7,5 µm) bestrahlt. Nach Trennung der beiden Träger ist deutlich zu erkennen, dass erfolgreich Material aus dem Monomerfilm (siehe Fig. 5A) auf den Zielträger (siehe Fig. 5B) transferiert wurde.

### (5) Synthese von Molekülarrays

Es wurde nach dem in Fig. 6 dargestellten Schema vorgegangen, um einen Peptidarray mit den Aminosäuresequenzen Tyr-Pro-Tyr-Asp-Val-Pro-Asp-Tyr-Ala (Hämagglutinin oder HA) und Asp-Tyr-Lys-Asp-Asp-Asp-Asp-Lys (FLAG) mit einem Rastermaß von 150 µm zu synthetisieren.

Als Ausgangsträger wurden Glasobjektträger verwendet, die mit einer Zwischenschicht aus Polyimid in Form einer selbstklebenden Kapton-Folie der Firma DuPont versehen wurden. Anschließend wurden die entsprechenden Aminosäurederivate und ein Styrol-Acrylat-Copolymer (SLEC PLT-7552, Sekisui Chemical GmbH) in Dichlormethan gelöst und per Rotationsbeschichtung aufgetragen. Die fertig präparierten Ausgangsträger wurden, wie in Fig. 6 dargestellt, direkt auf den amino-funktionalisierten Zielträger gelegt und von oben durch den Ausgangsträger hindurch mit einem Laser bestrahlt (Wellenlänge 532 nm, Laserleistung 300-400 mW, Laserpulsdauer ca. 5 ms, Laserfokusdurchmesser ca. 20 µm). Dadurch wurde Material mit Aminosäurederivaten auf den Zielträger übertragen. Der Übertrag wurde mit verschiedenen Ausgangsträgern mit Aminosäuren gemäß den oben genannten Sequenzen der Peptide FLAG und HA wiederholt.

Nach dem Übertrag jeder Lage des Arrays wurde der Zielträger unter Argonatmosphäre für 90 min auf 90 °C erhitzt, um die Aminosäuren an den Zielträger zu kuppeln. Der Zielträger wurde mit einer Mischung aus N,N-Dimethylformamid, Diisopropylethylamin und Essigsäureanhydrid gewaschen, um überschüssige Aminosäuren und die Polymermatrix zu entfernen und um freie Aminogruppen auf dem Träger zu blockieren. Anschließend wurden die Fluorenylmethoxycarbonyl-Schutzgruppen mit einer Lösung aus Piperidin in N,N-Dimethylformamid von den Aminosäuren entfernt. Nach Fertigstellung der Peptidsequenzen wurden die Seitenschutzgruppen mit Trifluoressigsäure entfernt.

Fig. 7 zeigt eine Fluoreszenzaufnahme des Peptidarrays nach der Detektion der Peptide mit fluoreszenzmarkierten spezifischen Antikörpern (anti-FLAG Cy3 und anti-HA Cy5).

## Patentansprüche

1. Verfahren zur Herstellung von hochdichten Molekülarrays mit einem Rastermaß von ≤ 300 µm, wobei das Verfahren folgende Schritte umfasst:
(i) das Bereitstellen eines Zielträgers mit einer Vielzahl an diskreten Spots,
(ii) das Konditionieren ausgewählter Spots durch selektive und direkte Einwirkung elektromagnetischer Strahlung, und
(iii) das Umsetzen mindestens eines Monomers mit in den ausgewählten Spots des Zielträgers immobilisiert vorliegenden Reaktanden,
wobei mindestens ein Ausgangsträger mit einer Materialschicht in Form einer Partikelschicht oder Filmschicht bereitgestellt wird, die aus einer Polymermatrix besteht, in die das mindestens eine Monomer für die kombinatorische Synthese von Molekülarrays eingebettet ist,
wobei der Schritt (ii) des Konditionierens ausgewählter Spots das selektive Übertragen von Material mit den darin eingebetteten Monomeren vom Ausgangsträger auf den Zielträger und das ortsgenaue Fixieren dieses Materials mit den darin eingebetteten Monomeren auf dem Zielträger umfasst,
wobei das Übertragen und/oder Fixieren durch indirektes Erwärmen des Materials mittels elektromagnetischer Strahlung erfolgt, indem zwischen dem Ausgangsträger und der Materialschicht eine oder mehrere Zwischenschichten angeordnet sind, welche den Übertrag von Material unterstützen, oder indem Stoffe, die das Absorptionsverhalten beeinflussen, in der Polymermatrix eingebettet sind,
wobei die eine oder mehreren Zwischenschichten aus Kohlenstoff, einem Metall, Polyimid oder Polysiloxan bestehen,
wobei die Stoffe, die das Absorptionsverhalten beeinflussen, aus Graphitnanopartikeln, Rußpartikeln oder Fullerenen ausgewählt sind,
wobei als Quelle für die elektromagnetische Strahlung ein Dauerstrichlaser verwendet wird, und
wobei die Schritte (ii) und (iii) mit gleichen oder verschiedenen Ausgangsträgern iterativ durchgeführt werden.

2. Verfahren nach Anspruch 1, wobei zwischen dem Ausgangsträger und der Materialschicht eine oder mehrere Zwischenschichten angeordnet sind, welche die zu übertragenden Monomere oder den Zielträger und die darauf befindlichen Reaktanden vor der direkten oder indirekten Einwirkung der elektromagnetischen Strahlung schützen.

3. Verfahren nach Anspruch 1 oder 2, wobei das Übertragen von Material vom Ausgangsträger und das Fixieren auf dem Zielträger durch das Inkontaktbringen des Ausgangsträgers mit dem Zielträger und das indirekte Erwärmen der Partikel- oder Filmschicht durch die selektive und direkte Einwirkung der elektromagnetischen Strahlung erfolgt, wobei sich die Materialschicht zwischen den Trägern befindet.

4. Verfahren nach einem der Ansprüche 1 bis 3, wobei der Ausgangsträger und/oder der Zielträger aus einem flexiblen Material besteht.

5. Verfahren nach einem der Ansprüche 1 bis 4, wobei der Ausgangsträger und/oder der Zielträger während des Inkontaktbringens Vibrationen ausgesetzt sind bzw. ist oder zu mechanischen Schwingungen angeregt werden bzw. wird.

6. Verfahren nach Anspruch 1 oder 2, wobei das Übertragen und Fixieren des Materials vom Ausgangsträger auf den Zielträger ohne direkten Kontakt der Träger erfolgt, und wobei das Übertragen des Materials durch Volumenausdehnung der Materialschicht oder der mindestens einen Zwischenschicht erfolgt.

7. Verfahren nach Anspruch 6, wobei das Fixieren des übertragenen Materials auf dem Zielträger durch indirektes Erwärmen des Materials oder durch geeignete Wahl des Materials und/oder des Zielträgermaterials erfolgt.

8. Verfahren nach Anspruch 6 oder 7, wobei das Übertragen von Material durch die Bildung einer Blase in der Materialschicht oder der mindestens einen Zwischenschicht erfolgt.

9. Verfahren nach einem der Ansprüche 1 bis 8, wobei ein Raum zwischen den Trägern mit einer Flüssigkeit gefüllt ist.

## Claims

1. A method for producing high-density molecule arrays having a pitch of ≤ 300 µm, the method comprising the following steps:
(i) providing a target substrate having a plurality of discrete spots,
(ii) conditioning selected spots by selective and direct action of electromagnetic radiation, and
(iii) reacting at least one monomer with reactants present in immobilized form in the selected spots of the target substrate,
wherein there is provided at least one starting substrate having a material layer in the form of a particle layer or film layer, consisting of a polymer matrix in which the at least one monomer for the combinatorial synthesis of molecule arrays is embedded,
wherein the step (ii) of conditioning selected spots comprises the selective transfer of material with the monomers embedded therein from the starting substrate to the target substrate and the site-specific fixing of the material with the monomers embedded therein to the target substrate,
wherein the transfer and/or fixing takes place by indirect heating of the material by means of electromagnetic radiation in that one or more intermediate layers are arranged between the starting substrate and the material layer, which assist the transfer of material, or in that substances are embedded in the polymer matrix, which influence the absorption behavior,
wherein the one or more intermediate layers consist of carbon, a metal, polyimide or polysiloxane,
wherein the substances which influence the absorption behavior are selected from graphite nanoparticles, soot particles or fullerenes,
wherein a continuous wave laser is used as the source for the electromagnetic radiation, and
wherein the steps (ii) and (iii) are carried out iteratively with the same or different starting substrates.

2. The method according to claim 1, wherein one or more intermediate layers are arranged between the starting substrate and the material layer which protect the monomers to be transferred or the target substrate and the reactants located thereon from the direct or indirect action of the electromagnetic radiation.

3. The method according to claim 1 or 2, wherein the transfer of material from the starting substrate and fixing to the target substrate take place by contacting the starting substrate with the target substrate and heating the particle or film layer indirectly by the selective and direct action of the electromagnetic radiation, wherein the material layer is situated between the substrates.

4. The method according to any one of claims 1 to 3, wherein the starting substrate and/or the target substrate consists of a flexible material.

5. The method according to any one of claims 1 to 4, wherein the starting substrate and/or the target substrate is/are exposed to vibrations or excited to mechanical oscillations during the contacting.

6. The method according to claim 1 or 2, wherein the transfer and fixing of the material from the starting substrate to the target substrate take place without direct contact between the substrates, and wherein the transfer of the material takes place by expanding the volume of the material layer or of the at least one intermediate layer.

7. The method according to claim 6, wherein fixing of the transferred material to the target substrate takes place by indirect heating of the material or by a suitable choice of the material and/or of the target substrate material.

8. The method according to claim 6 or 7, wherein the transfer of material takes place by the formation of a bubble in the material layer or the at least one intermediate layer.

9. The method according to any one of claims 1 to 8, wherein a space between the substrates is filled with a liquid.

## Revendications

1. Procédé de fabrication de réseaux moléculaires à haute densité avec une dimension de grille de ≤ 300 µm, dans lequel le procédé comprend les étapes suivantes :
(i) la mise à disposition d'un support cible avec une pluralité de spots discrets,
(ii) le conditionnement de spots sélectionnés par action sélective et directe de rayonnement électromagnétique, et
(iii) la transformation d'au moins un monomère avec des réactifs présents de manière immobilisée dans les spots sélectionnés du support cible,
dans lequel au moins un support de départ est mis à disposition avec une couche de matériau sous forme d'une couche de particules ou couche de film qui se compose d'une matrice polymère dans laquelle l'au moins un monomère est incorporé pour la synthèse combinatoire de réseaux moléculaires,
dans lequel l'étape (ii) du conditionnement de spots sélectionnés comprend le transfert sélectif de matériau avec les monomères incorporés en son sein du support de départ au support cible et la fixation avec localisation précise de ce matériau avec les monomères incorporés en son sein sur le support cible,
dans lequel le transfert et/ou la fixation s'effectue par réchauffement indirect du matériau au moyen de rayonnement électromagnétique en ce qu'une ou plusieurs couches intermédiaires sont disposées entre le support de départ et la couche de matériau, lesquelles facilitent le transfert de matériau, ou en ce que des substances qui influencent le comportement d'absorption sont incorporées dans la matrice polymère,
dans lequel la ou les couches intermédiaires se composent de carbone, d'un métal, de polyimide ou polysiloxane,
dans lequel les substances qui influencent le comportement d'absorption sont sélectionnées parmi des nanoparticules de graphite, particules de suie ou fullerènes,
dans lequel un laser à onde continue est utilisé en tant que source pour le rayonnement électromagnétique, et
dans lequel les étapes (ii) et (iii) sont réalisées de manière itérative avec des supports de départ identiques ou différents.

2. Procédé selon la revendication 1, dans lequel une ou plusieurs couches intermédiaires sont disposées entre le support de départ et la couche de matériau, lesquelles protègent les monomères à transférer ou le support cible et les réactifs se trouvant sur lui de l'action directe ou indirecte du rayonnement électromagnétique.

3. Procédé selon la revendication 1 ou 2, dans lequel le transfert de matériau du support de départ et la fixation sur le support cible s'effectuent par la mise en contact du support de départ avec le support cible et le réchauffement indirect de la couche de particules ou de film s'effectue par l'action sélective et directe du rayonnement électromagnétique, dans lequel la couche de matériau se trouve entre les supports.

4. Procédé selon une des revendications 1 à 3, dans lequel le support de départ et/ou le support cible se compose d'un matériau flexible.

5. Procédé selon une des revendications 1 à 4, dans lequel le support de départ et/ou le support cible est ou sont exposé(s) à des vibrations pendant la mise en contact ou est ou sont soumis à des oscillations mécaniques.

6. Procédé selon la revendication 1 ou 2, dans lequel le transfert et la fixation du matériau du support de départ sur le support cible s'effectuent sans contact direct des supports, et dans lequel le transfert du matériau s'effectue par dilatation cubique de la couche de matériau ou de l'au moins une couche intermédiaire.

7. Procédé selon la revendication 6, dans lequel la fixation du matériau transféré sur le support cible s'effectue par réchauffement indirect du matériau ou par choix approprié du matériau et/ou du matériau de support cible.

8. Procédé selon la revendication 6 ou 7, dans lequel le transfert de matériau s'effectue par la formation d'une bulle dans la couche de matériau ou l'au moins une couche intermédiaire.

9. Procédé selon une des revendications 1 à 8, dans lequel un espace entre les supports est rempli d'un liquide.
